(19) Europäisches Patentamt
European Patent Office
Office européen des brevets

(11) Publication number: **0 390 490 A1**

(12) **EUROPEAN PATENT APPLICATION**

(21) Application number: 90303239.9

(22) Date of filing: 27.03.90

(51) Int. Cl.⁵: C08F 136/20, C08F 4/68

(30) Priority: 28.03.89 JP 73983/89

(43) Date of publication of application: 03.10.90 Bulletin 90/40

(84) Designated Contracting States: BE DE FR GB IT NL SE

(71) Applicant: Tonen Corporation
1-1 Hitotsubashi, 1-Chome Chiyoda-Ku
Tokyo 100(JP)

(72) Inventor: Doi, Yoshiharu
2617-39, Imajuku-cho, Asahi-ku
Yokohama-shi, Kanagawa-ken(JP)
Inventor: Ueki, Satoshi
4-7-301, Tate 2-chome
Shiki-shi, Saitama-ken(JP)
Inventor: Furuhashi, Hiroyuki
4-6, Nishitsurugaoka 1-chome, Ooi-machi
Iruma-gun, Saitama-ken(JP)

(74) Representative: Veldhuizen, Albert Dirk Willem et al
Exxon Chemical Limited Exxon Chemical Technology Centre PO Box 1
Abingdon Oxfordshire OX13 6BB(GB)

(54) **Hexadiene polymer and process for producing the same.**

(57) Hexadiene polymers and process for producing the same in the presence of a vanadium-chelate-containing catalyst and an aluminum-alkyl-containing co-catalyst.

EP 0 390 490 A1

# HEXADIENE POLYMER AND PROCESS FOR PRODUCING THE SAME

## Field of Industrial Application

The present invention relates to a new polymer of 1,5-hexadiene and a process for producing the same.

## Prior Art

It is known that 1,5-hexadiene undergoes 1,2-addition or cyclization when it is homopolymerized or copolymerized with an α-olefin such as propylene by the aid of a Ziegler-Natta Catalyst. It is mentioned in "Ziegler-Natta Catalyst and Polymerization", Academic Press (1979), p. 549, that a 1,2-addition polymer is obtained when 1,5-hexadiene is polymerized at 25°C or -20°C by the aid of a catalyst composed of V-(acetylacetonato)$_3$ and $A1Et_2Cl$.

## Problems to be Solved by the Invention

Up to now, no one has reported that 1,5-hexadiene undergoes cyclization simultaneously with 1,4-addition. It is an object of the present invention to provide a new polymer of 1,5-hexadiene which has both 1,4-addition and cyclic structure.

## Means to Solve the Problems

The present inventors found that the object of the present invention is achieved by polymerizing 1,5-hexadiene at a low temperature below -50°C in the presence of a catalyst composed of a vanadium chelate compound and an organoaluminium compound, said catalyst being known to be effective for the homogeneous polymerization of propylene or ethylene. The present invention was completed on the basis of this finding.

## Summary of the Invention

The gist of the present invention resides in:

(1) A hexadiene polymer comprising the following repeating units and having a number-average molecular weight of 2,000-500,000.

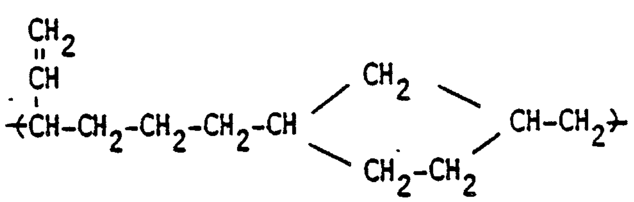

(2) A process for producing a hexadiene polymer consisting of the following repeating units and having a number-average molecular weight of 2,000-500,000,

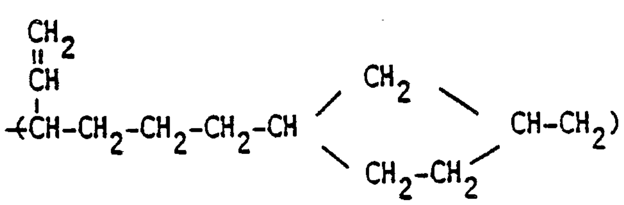

said process comprising polymerizing 1,5-hexadiene at -50°C or below in the presence of a catalyst composed of a vanadium compound represented by the general formula given below and an organoaluminum compound.

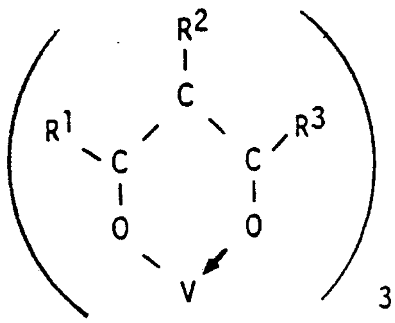

wherein $R^1$, $R^2$, and $R^3$ each denotes a hydrogen atom or a $C_{1-8}$ hydrocarbon group, provided that at least one of $R^1$, $R^2$, and $R^3$ should be a hydrogen atom but all of $R^1$, $R^2$, and $R^3$ should not be hydrogen atoms.

Catalyst

(a) Vanadium compound

The process of the present invention employs a vanadium compound represented by the general formula given below:

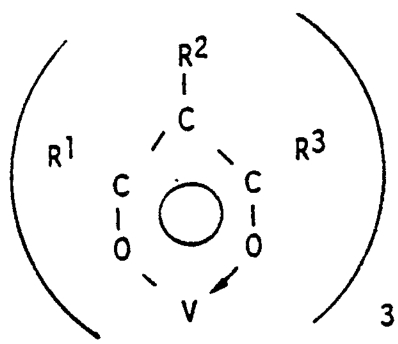

(where $R^1$, $R^2$, and $R^3$ are defined as above). The vanadium compound represented by the general formula above will be explained with reference to the following examples.

o Those in which $R^2$ is a hydrogen atom and $R^1$ and $R^3$ are hydrocarbon atoms.

$R^1/R^3$: $CH_3/CH_3$, $CH_3/C_2H_5$, $C_2H_5/C_2H_5$, $CH_3/C_6H_5$, $C_2H_5/C_6H_5$, $C_6H_5/C_6H_5$, $CH_3/C_6H_5CH_2$, $C_6H_5CH_2/C_6H_5CH_2$, $C_2H_5/C_6H_5CH_2$, and $C_6H_5/C_6H_5CH_2$.

o Those in which $R^2$ is a hydrocarbon group and either of $R^1$ and $R^3$ is a hydrogen atom, with the other being a hydrocarbon group.

$R^2/R^1$ or $R^3$: $CH_3/CH_3$, $C_2H_5/CH_3$, $CH_3/C_2H_5$, $C_2H_5/C_2H_5$, $C_6H_5/CH_3$, $CH_3/C_6H_5$, $C_6H_5/C_2H_5$, $C_2H_5/C_6H_5$, $C_6H_5/C_6H_5$, $C_6H_5CH_2/CH_3$, $CH_3/C_6H_5CH_2$, $C_6H_{56}CH_2/C_6H_5CH_2$, $C_6H_5CH_2/C_6H_5CH_2/C_2H_5$, $C_2H_5/C_6H_5CH_2$, $C_6H_5CH_2/C_6H_5$, and $C_6H_5/C_6H_3CH_2$.

o Those in which $R^2$ is a hydrogen atom and either of $R^1$ and $R^3$ is a hydrogen atom, with the other being a hydrocarbon group.

$R^1$ or $R^3$: $CH_3$, $C_2H_5$, $C_6H_5$, and $C_6H_5CH_2$.

Preferable among the above-listed compounds are the following

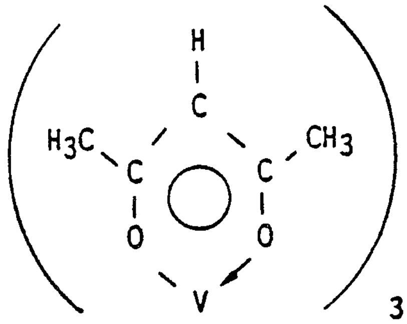

V(acetylacetonato)$_3$

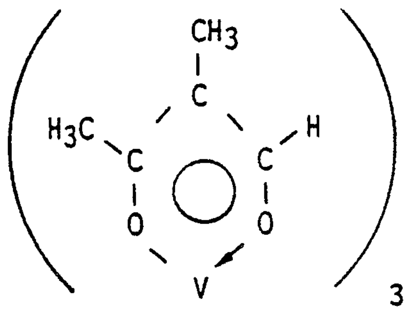

V(2-methyl-1,3-butanedionato)$_3$

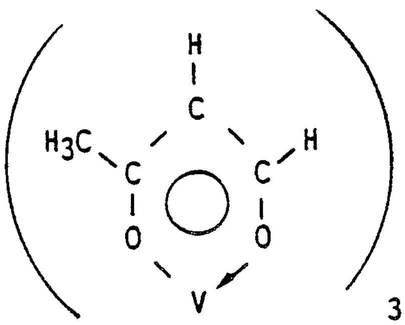

V(1,3-butanedionato)$_3$

(b) Organoaluminum compound

The organoaluminum compound is one which is represented by the general formula $R_nAlX_{3-n}$ (where R denotes an alkyl group or aryl group; X denotes a halogen atom or hydrogen atom; and n is an arbitrary number defined by $1 \leq n < 3$.) It is a compound, mixture, or complex compound of $C_{1-18}$ (preferably $C_{2-6}$) alkyl aluminum, such as dialkyl aluminum monohalide, monoalkyl aluminum dihalide, and alkyl aluminum sesquihalide. Dialkyl aluminum monohalide includes dimethyl aluminum chloride, diethyl aluminum chloride, diethyl aluminum bromide, diethylaluminum iodide, diisobutyl aluminum chloride; monoalkyl aluminum dihalide includes methyl aluminum dichloride, ethyl aluminum dichloride, methyl aluminum dibromide, ethyl aluminum dibromide, ethyl aluminum diiodide, and isobutyl aluminum dichloride; and alkyl aluminum sesquihalide includes ethyl aluminum sesquichloride.

The organoaluminum compound should be used in an amount of 1 to 1,000 mol for 1 mol of the vanadium compound.

## Polymerization of 1,5-Hexadiene

The polymerization of 1,5-hexadiene should preferably be carried out in a solvent which remains inert and liquid during the polymerization. Examples of such a solvent include propane, butane, pentane, hexane, heptane, and toluene. The polymerization temperature should be -50° C or below. Especially, polymerization at -65° C or below gives rise to a nearly monodisperse polymer having a molecular weight distribution of 1.05 to 1.4 (the ratio of $M_w$ (weight-average molecular weight) to $M_n$ (number-average molecular weight). The yield and molecular weight of the polymer will be proportional to the length of polymerization time.

According to the process of the present invention as mentioned above, there is obtained a polymer which comprises the repeating units shown below and has a number-average molecular weight of 2,000 to 500,000 (in terms of propylene).

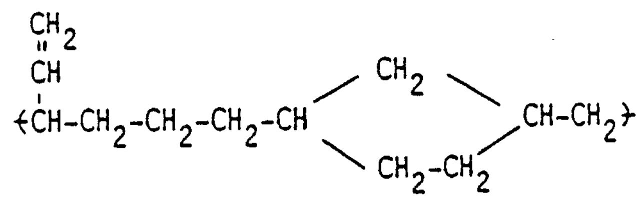

## Effect of the Invention

The present invention makes it possible to produce a new polymer having the 1,4-addition and cyclic structure at a 100% selectivity.

The polymer of the present invention has a carbon-carbon double bond on the side chain, and hence it may be added to a certain compound for its modification. Because of this property, it will find use as a raw material of adhesives, paints, blending compatibilizers, surfactants, and viscosity index improvers for lubricating oil.

In addition, the polymers of the present invention are amorphous and hence colorless and transparent, and has no polar groups and hence has a very low degree of water absorption and moisture absorption. Therefore, it will find use as a raw material of the substrate of information recording film.

## Brief Description of the Drawings

Figures 1(1) and 1(2) and Figure 2 are NMR charts of the polymers obtained according to the present invention.

## Example 1

In a 3-ml flask, with the atmosphere therein thoroughly replaced with nitrogen, was placed 30 ml of toluene, followed by cooling to -78° C. To the flask was added 50 mmol of 1,5-hexadiene at the same temperature. To the flask were further added a toluene solution containing 20 mmol of $Al(C_2H_5)_2Cl$ and a toluene solution containing 1 mmol of V(acetylacetonato)$_3$. Polymerization was initiated with stirring. After polymerization for 3 hours at -78° C, the reaction mixture was brought into contact with 300 ml of HCl-ethanol mixture. The resulting polymer was washed five times with 300 ml of ethanol, followed by drying under reduced pressure at normal temperature.

The resulting polymer was tested for molecular weight by GPC. It was found that $\overline{M}_n$ 6,600 (in terms of propylene) and $\overline{M}_w/\overline{M}_n$ = 1.4. In addition, this polymer gave a 25 MHz $^{13}$C-NMR spectrum as shown in Fig. 1(1). A resonance line assigned to the double bond carbon is found at 100-150 ppm. This assignment is as follows:

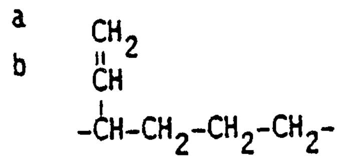

Moreover, this polymer was hydrogenated in the same manner as mentioned in literature [Macromolecules (1986) 19, 2409]. The resulting product gave a 25 MHz $^{13}C$-NMR spectrum as shown in Fig. 1(2). The assignment is as follows:

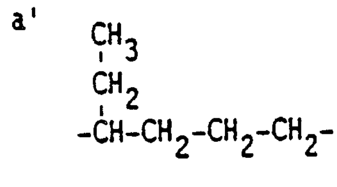

The fact that Fig. 1(2) does not show the peaks assigned to the double bond carbons which are seen in Fig. 1(1) suggests that the assignment in Fig. 1(1) is reasonable.

The hydrogenated polymer was further tested for 125 MHz $^{13}C$-NMR to determine the assignment of the peaks in the range of 0-50 ppm. The spectrum is shown in Fig. 2. The assignment of the peaks is as follows:

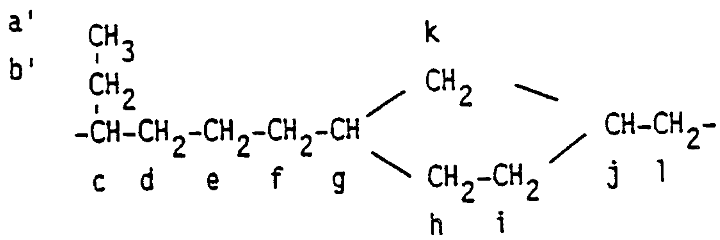

The above-foregoing indicates that the process of the present invention gives rise to a unique polymer having a double bond in the side chain and a cyclic structure in the main chain as represented by the following structural formula.

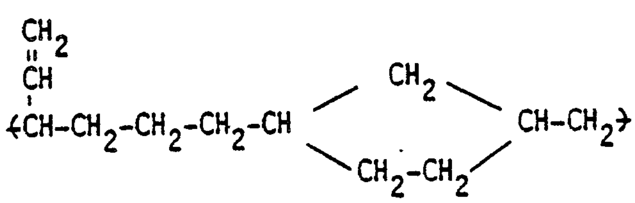

## Example 2

The polymerization of 1,5-hexadiene was carried out in the same manner as in Example 1, except that the polymerization time was changed to 3 hours. The results are shown in Table 1. The resulting polymer was found to have the same structure as that of the polymer in Example 1.

## Example 3

In a 300-ml flask, with the atmosphere therein thoroughly replaced with nitrogen, was placed 120 ml of toluene, followed by cooling to -50 °C. To the flask was added 125 mmol of 1,5-hexadiene at the same

temperature. To the flask were further added a toluene solution containing 10 mmol of $Al(C_2H_5)_2Cl$ and a toluene solution containing 1 mmol of V(2-methyl-1,3-butanedionato)$_3$. Polymerization was initiated with stirring. After polymerization for 4 hours at -50 °C, the reaction mixture was treated in the same manner as in Example 1. Thus there was obtained a polymer having the same structure as that of the polymer in Example 1. The results are shown in Table 1.

Example 4

The polymerization of 1,5-hexadiene was carried out in the same manner as in Example 1, except that the V(acetylacetonato)$_3$ was replaced by V(1,3-butanedionato)$_3$, the amount of toluene was changed to 120 ml, the polymerization temperature was changed to -70 °C, and the polymerization time was changed to 6 hours. The results are shown in Table 1.

Table 1

| Example No. | Yields (g/g-V atom) | $\overline{M}_n$ ($\times10^3$) | $\overline{M}_w/\overline{M}_n$ |
|---|---|---|---|
| 1 | 28.8 | 6.6 | 1.4 |
| 2 | 14.3 | 3.5 | 1.3 |
| 3 | 90.3 | 14.4 | 1.4 |
| 4 | 33.4 | 7.6 | 1.4 |

**Claims**

1. A hexadiene polymer comprising the repeating units

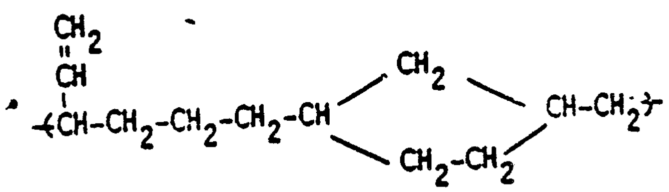

preferably having a number-average molecular weight of 2,000-500,000.

2. A process for producing a hexadiene polymer comprising the repeating units

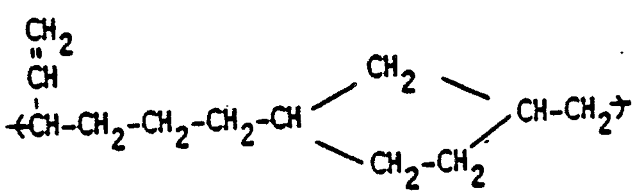

and having a number-average molecular weight of 2,000-500,000, said process comprising polymerizing 1,5-hexadiene at -50 °C or below in the presence of a catalyst composed of a vanadium compound represented by the general formula given below and an organoaluminium compound.

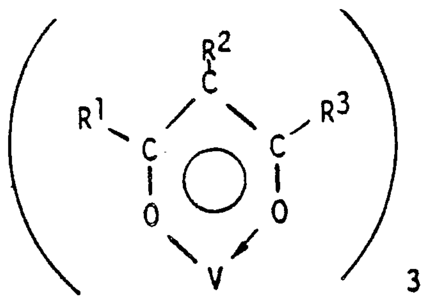

wherein $R^1$, $R^2$, and $R^3$ each denotes a hydrogen atom or a $C_{1-8}$ hydrocarbon group, provided that at least one of $R^1$, $R^2$, and $R^3$ should be a hydrogen atom but all of $R^1$, $R^2$, and $R^3$ should not be hydrogen atoms.

3. A polymer comprising repeating units predominantly of a diolefin, preferably a non-conjugated diolefin and especially an alpha omega terminally unsaturated diolefin such as 1,4 pentadiene; 1,5 hexadiene; 1,6 heptadiene or 1,7 octadiene preferably having from 4 to 10 carbon atoms or mixtures of two or more diolefins polymerised using a beta-diketone vanadium chelate and an organoaluminium compound.

4. A polymer according to claim 3 containing at least 60%, preferably at least 75% by weight of the diolefin or diolefins.

FIG.1A

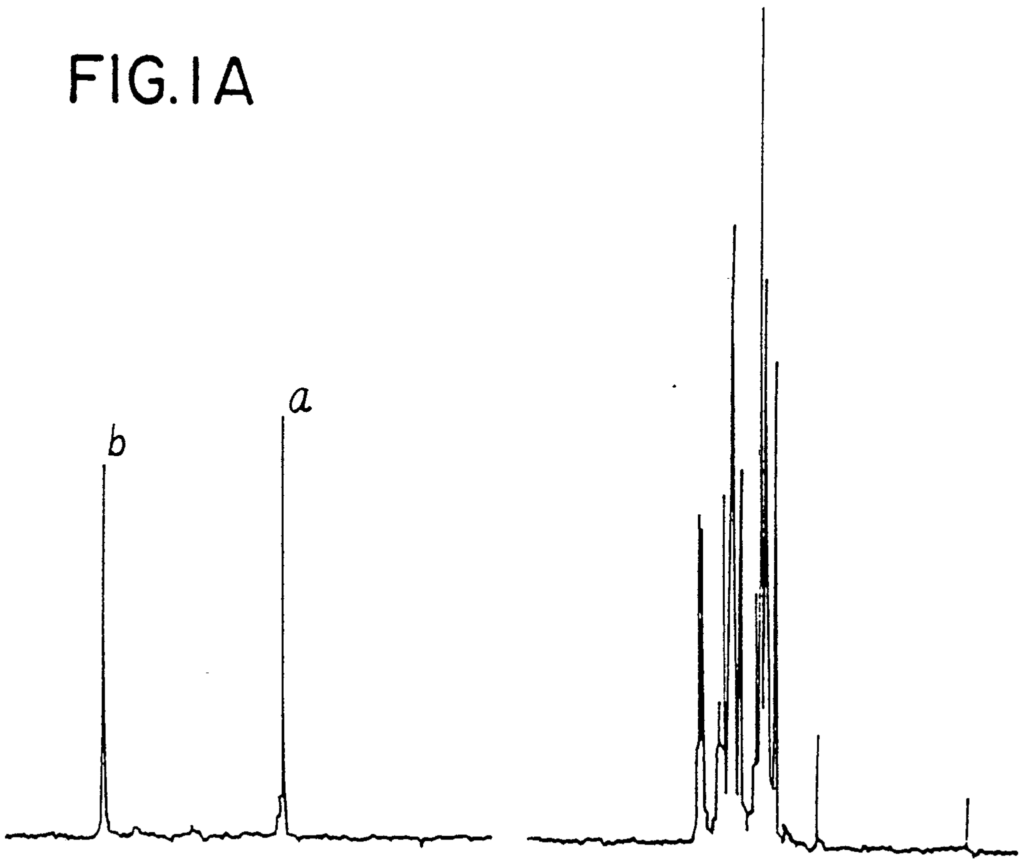


FIG.1B

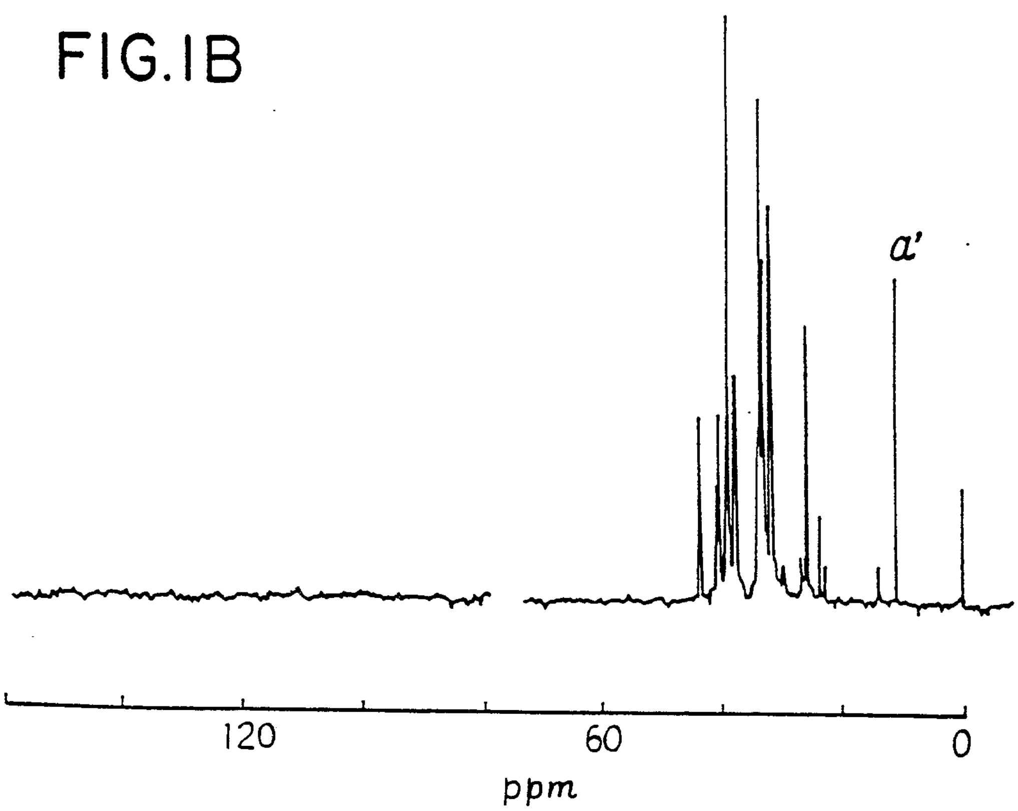

FIG.2

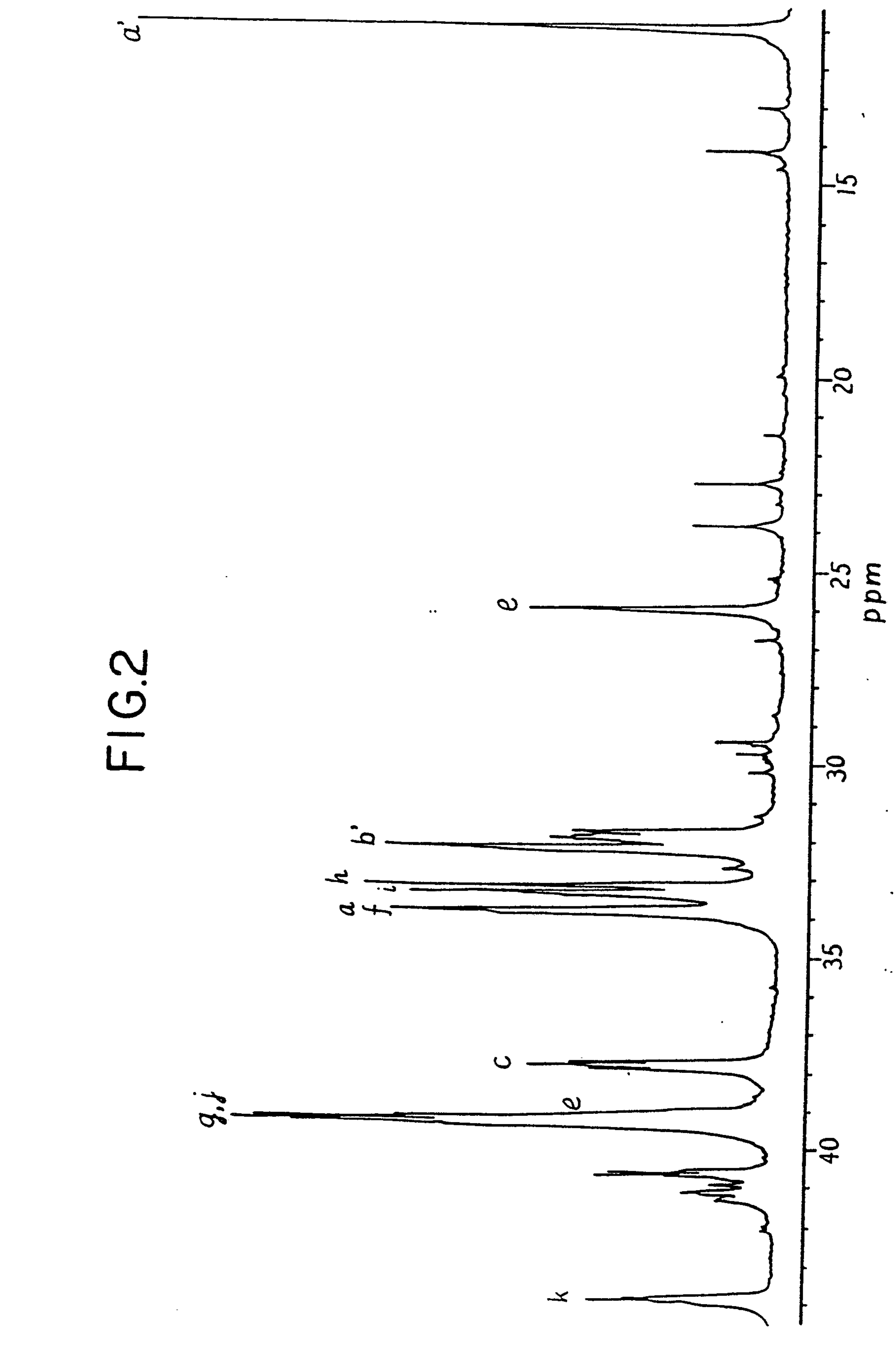

European Patent Office

# EUROPEAN SEARCH REPORT

Application Number

EP 90 30 3239

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | MAKROMOL. CHEM., vol. 190, no. 3, 1989, pages 643-651; Y. DOI et al.: "Synthesis and structure of a "living" copolymer of propylene and 1,5-hexadiene" * Page 645, table 1, sample 1 * | 1-4 | C 08 F 136/20<br>C 08 F 4/68 |
| P,X | DATABASE CHEMICAL ABSTRACTS (HOST:STN), vol. 111, no. 10, 1989, abstract no. 78655x, Columbus, Ohio, US; Y. DOI et al.: "Polymerization of diolefins by a soluble vanadium-based catalyst", & KOBUNSHI RONBUNSHU, 46(4), 215-22 * Abstract * | 1-4 | |
| X | CHEMICAL ABSTRACTS, vol. 69, 1968, page 6341, abstract no. 67782z, Columbus, Ohio, US; E. ANGELESCU et al.: "Activity of the diethylaluminum chloride-vanadylbis-(acetylacetonate) catalyst in the polymerization of 1,5-hexadiene", & STUD. CERCET. CHIM. 1968, 16(5), 389-94 * Abstract * | 3-4 | TECHNICAL FIELDS SEARCHED (Int. Cl.5)<br>C 08 F |
| X | US-A-3 472 830 (W.N. BAXTER et al.) * Column 3, lines 24-57 * | 1 | |

The present search report has been drawn up for all claims

| Place of search | Date of completion of the search | Examiner |
|---|---|---|
| THE HAGUE | 16-07-1990 | VAN HUMBEECK F.W.C. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)